# EUROPEAN PATENT SPECIFICATION

(11) **EP 4 227 970 B1**
(45) Date of publication and mention of the grant of the patent: **11.02.2026**
(21) Application number: 23156435.2
(22) Date of filing: 14.02.2023
(51) Int. Cl.: H01H 23/14, H02G 3/14

(54) **SWITCH MODULE**
SCHALTMODUL
MODULE DE COMMUTATION

(30) Priority: 14.02.2022 BE 202205097
(43) Date of publication of application: 16.08.2023
(73) Proprietor: Niko NV, 9100 Sint-Niklaas (BE)
(72) Inventor: D'HONDT, Arnaud, 9000 Gent (BE); VANDER HOEVEN, Gunnar, 9070 Heusden (BE); COOREMAN, Tom, 9310 Meldert (BE)
(74) Representative: Calysta NV

(56) References cited:
- AU-A- 3 380 171
- CN-A- 104 851 715
- DE-A1- 102010 024 245
- JP-Y2- S5 810 267

## Description

### Technical field of the invention

The present invention relates to a switch module. More particularly, the present invention provides a switch module in which uneven walls or the like do not have an impact on the proper mounting of a cover plate onto the switch module.

### Background of the invention

During installing of switches onto a wall, several problems can arise. One of these problems is uneven walls. When a switch module is installed in a mounting box in a wall, these uneven walls can cause the mounting system of the switch module to not touch the walls at all points. When finishing the switch module with a cover plate, this can cause misalignment between the switch button and the hole in the cover plate. This problem is even more present when more than one switch module is provided next to each other in a horizontal way, as the uneven walls cause a difference in distance between the centers of the neighbouring switch modules. As cover plates for covering multiple switch modules take that center distance into account, the misalignment can become severe in this case, which leads to poorly finished switches.

JP S58 10267 Y2 relates to a seesaw complete switch in which large play was intentionally provided between the switch button, the switch button mounting shaft, and the switch button mounting plate. This configuration should, according to the prior art, allow the switch button to tilt or shift to prevent misalignment, slippage, and malfunction.

### Summary of the invention

It is an object of embodiments of the present invention to provide a switch module for which uneven walls or the like do not have an impact on the proper mounting of a cover plate onto the switch module.

The above objective is accomplished by a device according to embodiments of the present invention.

The present invention provides a switch module one or two switch buttons and a mounting frame for fixing the switch module to a mounting box in a wall. The switch module further comprises a button adapter provided on each of the one or two switch buttons, the switch button with the button adapter fitting into a recess in the mounting frame, and a frame adapter provided on the mounting frame and comprising pivot points for removably connecting the button adapter to the frame adapter, wherein the button adapter comprises extensions that can be clicked on with said pivot points. The button adapter and the frame adapter are adapted to provide clearance between opposite sides of the frame adapter and the button adapter on the sides of the button adapter adjacent to the frame adapter, and between the button adapter and inner sides of the recess in the mounting frame, causing the button with the button adapter to be shiftable or slidable left and right with respect to the middle position, thus making the switch module less sensitive to mounting tolerances.

With providing clearance is meant there is a clear space or small distance between longitudinal sides of the frame adapter and two sides of the button adapter close to the longitudinal sides of the frame adapter, as well as between the button adapter and the inner sides of the recess in the mounting frame in which the button adapter is provided. In other words, there is a distance between the adjacent surfaces of the two longitudinal sides of the frame adapter and the two sides of the button adapter which face those longitudinal sides of the frame adapter on the one hand, and between the lower surface of the button adapter and the inner sides of the recess in which the button adapter is provided.

The existence of this clearance or space as described above is a very important advantage of a switch module according to embodiments of the invention. Due to this clearance the button adapter will be able to move or slide sideways and thus may kind of float. Thus, when mounting the cover plate, the button adapters will align with the cover plates and possible mounting tolerances are thus compensated for. This clearance thus provides room for compensating for misfitting of the cover plate. In other words, due to this clearance, even on uneven walls, a cover plate can always be provided on the switch module in a perfect way, with switch buttons being well aligned in the middle of the hole in the cover plate, and cover plates being flush with the wall after being provided to the switch module.

This clearance will also compensate for the differences in distance between neighbouring modules in case of multiple switch modules being located next to each other in a horizontal direction and being covered with one cover plate.

According to embodiments of the invention where the switch module may comprise two switch buttons, the frame adapter may comprise two compartments, each compartment comprising pivot points to receive one of the button adapters.

According to embodiments of the invention, the button adapter may be fixedly connected to the switch button. According to other embodiments of the invention, the button adapter may be removably connected to the switch button.

According to embodiments of the invention, the frame adapter may be fixedly connected to the mounting frame. According to other embodiments of the invention, the frame adapter may be removably connected to the mounting frame.

The switch button may be any kind type of switch button and may, for example be a toggle, a rocker, a square switch button or the like.

According to further embodiments, the switch module may further comprise a cover plate. The cover plate may further comprise a light guide.

### Brief description of the drawings

It has to be noted that same reference signs in the different figures refer to same, similar or analogous elements.
Figs. 1a, 1b and 1c schematically illustrate switch modules covered with a cover plate.
Figs. 2a and 2b, 3 and 4 schematically illustrate a switch module according to embodiments of the invention.
Fig. 5 schematically illustrates three switch modules according to embodiments of the invention mounted next to each other in a horizontal way.

### Description of illustrative embodiments

In the description different embodiments will be used to describe the invention. Therefore, reference will be made to different drawings. It has to be understood that these drawings are intended to be non-limiting, the invention is only limited by the claims. The drawings are thus for illustrative purposes, the size of some of the elements in the drawings may be exaggerated for clarity purposes.

The term "comprising" is not to be interpreted as limiting the invention in any way. The term "comprising", used in the claims, is not intended to be restricted to what means is described thereafter; it does not exclude other elements, parts or steps.

The term "connected" as used in the claims and in the description has not to be interpreted as being restricted to direct connections, unless otherwise specified. Thus, part A being connected to part B is not limited to part A being in direct contact to part B, but also includes indirect contact between part A and part B, in other words also includes the case where intermediate parts are present in between part A and part B.

Not all embodiments of the invention comprise all features of the invention. In the following description and claims, any of the claimed embodiments can be used in any combination.

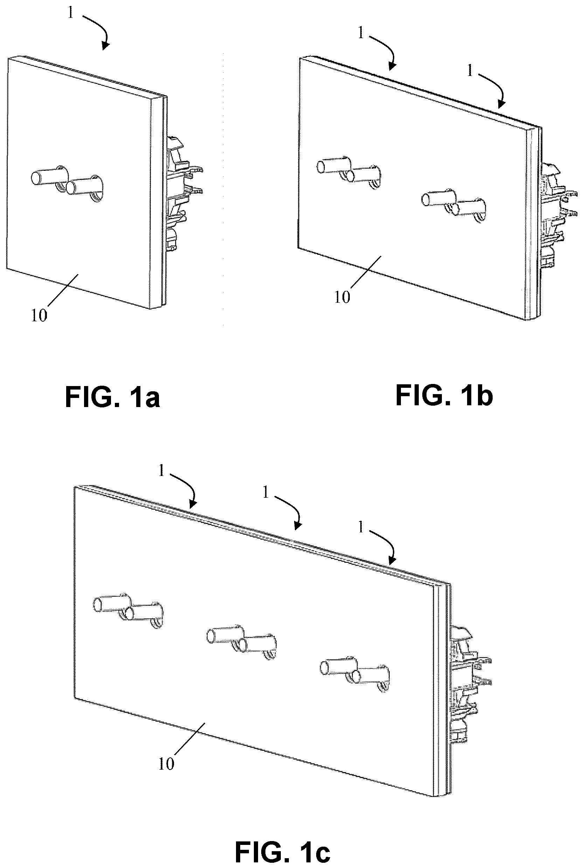

Figs. 1a to 1c illustrated a switch module 1 (Fig. 1a) and combinations of two switch modules 1 (Fig. 1b) and three switch modules 1 (Fig. 1c) respectively finished with a single (Fig. 1a), a twofold (Fig. 1b) and a threefold (Fig. 1c) cover plate 10. A problem that can arise is that, due to, for example, uneven walls, it becomes difficult to fully fit the cover plate 10 as it should. That is because, in case of uneven walls, differences in distance between the switch modules that may occur during mounting in the wall. A consequence hereof is that switch buttons may not be well aligned into the holes in the cover plate or that the cover plate 10 cannot be fixed properly to the switch module 1. This can already be a problem in case of a single switch module with one or two switch buttons, but will be more visible and accentuated in case of multiple switch modules with a single switch button that have to be provided on a wall next to each other in a horizontal direction.

The present invention provides a switch module comprising one or two switch buttons, and a mounting frame for fixing the switch module to a mounting box in a wall. The switch module further comprises a button adapter for each of the one or two switch buttons, the button adapter with the switch button fitting into a recess in the mounting frame, and a frame adapter, fixedly connected to the mounting frame and comprising pivot points for removably connecting the button adapter to the frame adapter. The button adapter and the frame adapter are adapted to provide clearance between the frame adapter and the button adapter on both sides of the button adapter, and between the button adapter and inner sides of the recess in the mounting frame.

With providing clearance is meant there is a clear space or small distance between longitudinal sides of the frame adapter and two sides of the button adapter close to the longitudinal sides of the frame adapter, as well as between the button adapter and the inner sides of the recess in the mounting frame in which the button adapter is provided. In other words, there is a distance between the adjacent surfaces of the two longitudinal sides of the frame adapter and the two sides of the button adapter which face those longitudinal sides of the frame adapter on the one hand, and between the lower surface of the button adapter and the inner sides of the recess in which the button adapter is provided.

The existence of the clearance or space as described above is a very important advantage of a switch module according to embodiments of the invention. Due to this clearance the button adapter will be able to move or slide sideways and thus may kind of float. Thus, when mounting the cover plate, the button adapters will align with the cover plates and possible mounting tolerances are thus compensated for. This clearance thus provides room for compensating for misfitting of the cover plate. In other words, due to this clearance, even on uneven walls, a cover plate can always be provided on the switch module in a perfect way, with switch buttons being well aligned in the middle of the hole in the cover plate, and cover plates being flush with the wall after being provided to the switch module.

This clearance or space will also compensate for the differences in distance between neighbouring modules in case of multiple switch modules being located next to each other in a horizontal direction and being covered with one cover plate.

The present invention will hereinafter be described by means of different embodiments. It has to be understood that these embodiments are only for the ease of understanding the invention and are not intended to limit the invention in any way.

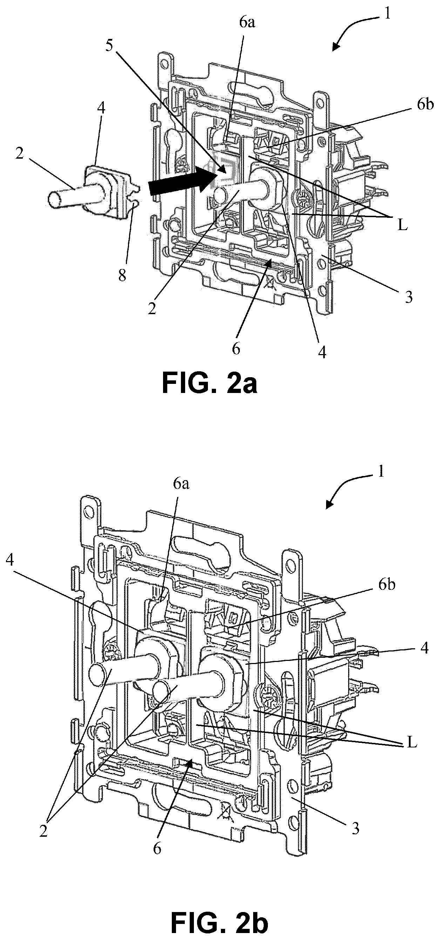

Figs. 2a and 2b, 3 and 4 illustrate a switch module according to embodiments of the invention. In the example given, the switch module 1 comprises two switch buttons 2, which may be toggle buttons. It has to be understood that this is not intended to limit the invention in any way. According to embodiments of the invention, the switch buttons may also be rocker buttons or square switch buttons, or any other suitable switch buttons as known by a person skilled in the art. Further, the switch module 1 may also comprise only one switch button 2 instead of two.

The switch module 1 furthermore comprises a mounting frame 3 for fixing the switch module 1 to a mounting box in a wall. The mounting frame 3 may be any type of mounting frame as known by a person skilled in the art.

The switch module 1 comprises a button adapter 4 mounted on each of the two switch buttons 2. The switch button 2 with the button adapter 4 fits into a recess 5 in the mounting frame 3.

According to embodiments of the invention, the switch button 2 may be fixedly connected to the button adapter 4. According to other embodiments, the button adapter 4 may be removably provided onto the switch button 2.

Further, the switch module 1 comprises frame adapter 6. The frame adapter 6 may, according to embodiments of the invention be fixedly connected to connected to the mounting frame 3. According to other embodiments, the frame adapter 6 may be removably fixed to the mounting frame 3. The frame adapter 6 comprises pivot points 7 at opposite sides. The button adapter 4 comprises extensions 8 in the shape of half circles that can be clicked over the pivot points 7 on the fixed frame adapter 3.

In the example given, the switch module 1 comprises two switch buttons 2. Therefore, the frame adapter 6 may comprise two compartments 6a, 6b. Each compartment 6a, 6b comprises two longitudinal sides L and pivot points 7 on these longitudinal sides L at opposite sides of each compartment 6a, 6b to receive extensions 8 from the button adapter 4.

In case of the switch module 1 comprising only one switch button 2, of course only one button adapter 4 is provided for the one switch button 2. In that case, the frame adapter may have only one compartment, comprising pivot points 7 at opposite sides of the compartment.

Further, the button adapter 4 may be adapted in shape to fit the shape of the type of switch button 2 that the switch module 1 comprises.

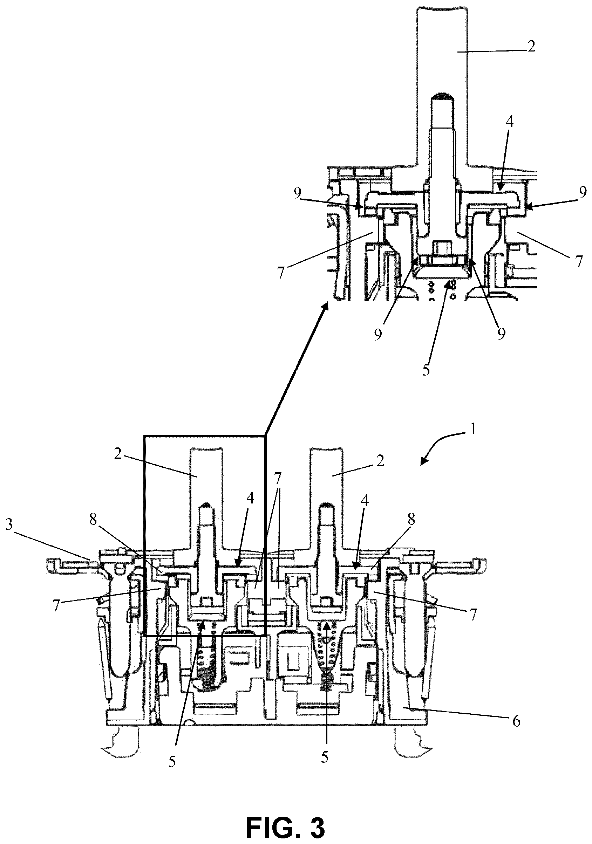

The button adapter 4 and the frame adapter 6 are adapted to, when installed, i.e. when the frame adapter 6 and the button adapter 4 are mounted to the mounting frame 3, provide clearance or a space 9 between the frame adapter and the button adapter on both sides of the button adapter which are close to the longitudinal sides L of the frame adapter, and between the button adapter and inner sides of the recess 5 in the mounting frame 3, as can be seen in the detailed drawing on top of Fig. 3.

This is a very important advantage of a switch module 1 according to embodiments of the invention. Due to this clearance or space 9 the button adapter 4 will be able to move or slide sideways and thus may kind of float. Thus, when mounting the cover plate (see further), the button adapters 4 will align with the cover plates 10 and possible mounting tolerances are thus compensated for. This clearance or space 9 thus provides room for compensating for misfitting of the cover plate. In other words, due to this clearance or space 9, even on uneven walls, a cover plate can always be provided on the switch module 1 in a perfect way, with switch buttons 2 being well aligned in the middle of the hole in the cover plate, and cover plates being flush with the wall after being provided to the switch module 1.

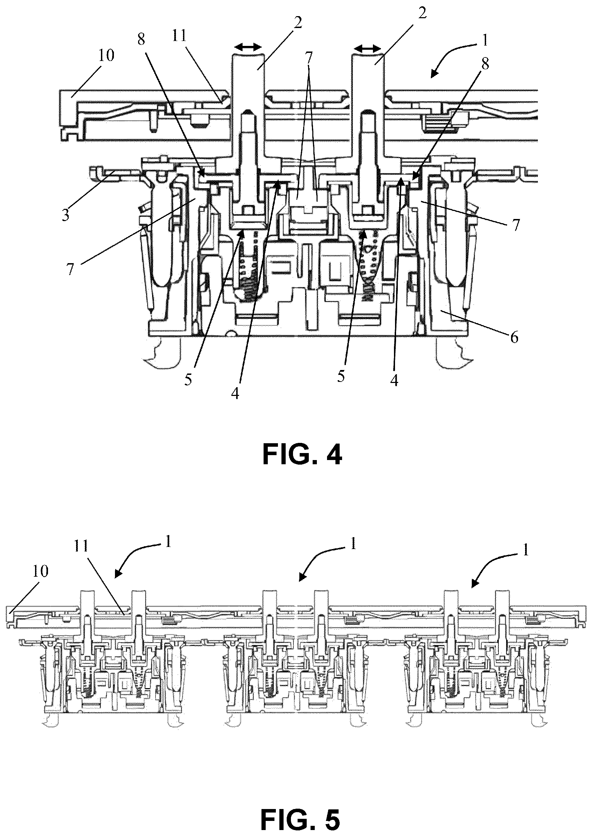

Further, in case of more than one switch module 1 being provided next to each other in a horizontal direction, as illustrated in Fig. 5, this clearance or space 9 will also compensate for the differences in distance between neighbouring modules 1.

The switch module 1 may furthermore comprise a cover plate 10 (see Fig. 4). According to embodiments of the invention, the cover plate 10 may furthermore comprise a light guide 11 for providing feedback light on the switch module. This may particular be advantageous when both the switch button(s) 2 and the cover plate 10 are made out of metal. In that case, the presence of a light guide 11 prevents both metal parts to contact each other.

According to embodiments of the invention, by providing a button adapter 4, in case of a toggle button as in the examples given, the button 2 is made wider, or in other words, a hinge axis is created that is wider than the button 2. The clearance or space 9 causes the button 2 with the button adapter 4 to be shiftable left and right with respect to the "ideal" position of the button 2, as indicated by the black arrows in Fig. 4. This "ideal" position is usually the middle position, which in ideal circumstances aligns the button 2 perfectly in the hole of the cover plate 10, when this cover plate 1 is provided onto the switch module 1. For s single cover plate 10 the middle position is only in a few conditions difficult to align, for example, when to buttons 2 are provided. When multiple-fold cover plates 10 are provided on multiple neighbouring switch modules 1, as in Fig. 5, the tolerances become bigger. The possibility of the button 2 to shift left and right, makes the switch modules 1 less sensitive to such tolerances.

Hence, with a switch module 1 according to embodiments of the invention, tolerance sensitivity is decreased without having a visual impact at the front side of the switch module when installed in a wall and covered with the cover plate 10.

## Claims

1. A switch module (1) comprising:
- one or two switch buttons (2), and
- a mounting frame (3) for fixing the switch module (1) to a mounting box in a wall,
wherein the switch module (1) further comprises:
- a button adapter (4) provided on each of the one or two switch buttons (2), the switch button (2) with the button adapter (4) fitting into a recess (5) in the mounting frame (3), and
- a frame adapter (6) provided on the mounting frame (3) and comprising pivot points (7) for removably connecting the button adapter (4) to the frame adapter (6), wherein the button adapter (4) comprises extensions (8) that can be clicked on said pivot points (7),
wherein the button adapter (4) and the frame adapter (6) are adapted to provide clearance (9):
- between opposite sides of the frame adapter (6) and the button adapter (4) on the sides of the button adapter (4) adjacent to the frame adapter (6), and
- between the lower surface of the button adapter (4) and inner sides of the recess (5) in the mounting frame (3),
causing the button (2) with the button adapter (4) to be shiftable or slidable left and right with respect to the middle position, thus making the switch module less sensitive to mounting tolerances.

2. A switch module (1) according to claim 1, the switch module (1) comprising two switch buttons (2), wherein the frame adapter (6) comprises two compartments (6a, 6b), each compartment (6a, 6b) comprising pivot points (7) to receive one of the button adapters (4).

3. A switch module (1) according to claim 1 or 2, wherein the button adapter (4) is fixedly connected to the switch button (2).

4. A switch module (1) according to claim 1 or 2, wherein the button adapter (4) is removably connected to the switch button (2).

5. A switch module (1) according to any of the previous claims, wherein the frame adapter (6) is fixedly connected to the mounting frame (3).

6. A switch module (1) according to any of claims 1 to 4, wherein the frame adapter (6) is removably connected to the mounting frame (3).

7. A switch module (1) according to any of the previous claims, wherein the switch button is a toggle, a rocker, a square switch button or the like.

8. A switch module (1) according to any of the previous claims, further comprising a cover plate (10).

9. A switch module (1) according to claim 8, wherein the cover plate (10) comprises a light guide (11).

## Patentansprüche

1. Schaltmodul (1), das umfasst:
- eine oder zwei Schalttasten (2), und
- einen Montagerahmen (3) zum Befestigen des Schaltmoduls (1) an einem Montagekasten in einer Wand,
wobei das Schaltmodul (1) ferner umfasst:
- einen Tastenadapter (4), der an jeder der einen oder zwei Schalttasten (2) vorgesehen ist, wobei die Schalttaste (2) mit dem Tastenadapter (4) in eine Aussparung (5) in dem Montagerahmen (3) passt, und
- einen Rahmenadapter (6), der an dem Montagerahmen (3) vorgesehen ist und Drehpunkte (7) zum lösbaren Verbinden des Tastenadapters (4) mit dem Rahmenadapter (6) aufweist, wobei der Tastenadapter (4) Verlängerungen (8) aufweist, die in die Drehpunkte (7) einklickbar sind,
wobei der Tastenadapter (4) und der Rahmenadapter (6) so gebildet sind, dass ein Spiel (9) entsteht:
- zwischen gegenüberliegenden Seiten des Rahmenadapters (6) und des Tastenadapters (4) auf den an den Rahmenadapter (6) angrenzenden Seiten des Tastenadapters (4), und
- zwischen der unteren Fläche des Tastenadapters (4) und den Innenseiten der Aussparung (5) im Montagerahmen (3),
wodurch die Taste (2) mit dem Tastenadapter (4) in Bezug auf die mittlere Position nach links und rechts verschiebbar oder gleitbar ist, wodurch das Schaltmodul weniger empfindlich gegenüber Montagetoleranzen ist.

2. Schaltmodul (1) nach Anspruch 1, wobei das Schaltmodul (1) zwei Schalttasten (2) umfasst, wobei der Rahmenadapter (6) zwei Fächer (6a, 6b) aufweist, wobei jedes Fach (6a, 6b) Drehpunkte (7) zur Aufnahme eines der Tastenadapter (4) aufweist.

3. Schaltmodul (1) nach Anspruch 1 oder 2, wobei der Tastenadapter (4) fest mit der Schalttaste (2) verbunden ist.

4. Schaltmodul (1) nach Anspruch 1 oder 2, wobei der Tastenadapter (4) lösbar mit der Schalttaste (2) verbunden ist.

5. Schaltmodul (1) nach einem der vorhergehenden Ansprüche, wobei der Rahmenadapter (6) fest mit dem Montagerahmen (3) verbunden ist.

6. Schaltmodul (1) nach einem der Ansprüche 1 bis 4, wobei der Rahmenadapter (6) lösbar mit dem Montagerahmen (3) verbunden ist.

7. Schaltmodul (1) nach einem der vorhergehenden Ansprüche, wobei die Schalttaste ein Kippschalter, eine Wippe, eine quadratische Schalttaste oder dergleichen ist.

8. Schaltmodul (1) nach einem der vorhergehenden Ansprüche, das ferner eine Abdeckplatte (10) umfasst.

9. Schaltmodul (1) nach Anspruch 8, wobei die Abdeckplatte (10) einen Lichtleiter (11) umfasst.

## Revendications

1. Module de commutation (1) comprenant :
- un ou deux boutons de commutation (2), et
- un cadre de montage (3) pour fixer le module de commutation (1) à un boîtier de montage dans un mur, dans lequel le module de commutation (1) comprend en outre :
- un adaptateur de bouton (4) prévu sur chacun des un ou deux boutons de commutation (2), le bouton de commutation (2) avec l'adaptateur de bouton (4) s'insérant dans un évidement (5) dans le cadre de montage (3), et
- un adaptateur de cadre (6) prévu sur le cadre de montage (3) et comprenant des points de pivotement (7) pour raccorder de manière amovible l'adaptateur de bouton (4) à l'adaptateur de cadre (6), dans lequel l'adaptateur de bouton (4) comprend des extensions (8) qui peuvent être encliquetées sur lesdits points de pivotement (7),
dans lequel l'adaptateur de bouton (4) et l'adaptateur de cadre (6) sont adaptés pour prévoir un dégagement (9) :
- entre des côtés opposés de l'adaptateur de cadre (6) et de l'adaptateur de bouton (4) sur les côtés de l'adaptateur de bouton (4) adjacents à l'adaptateur de cadre (6), et
- entre la surface inférieure de l'adaptateur de bouton (4) et les côtés intérieurs de l'évidement (5) dans le cadre de montage (3),
ce qui amène bouton (2) avec l'adaptateur de bouton (4) à pouvoir être décalé ou glissé vers la gauche et vers la droite par rapport à la position centrale, ce qui rend le module de commutation moins sensible aux tolérances de montage.

2. Module de commutation (1) selon la revendication 1, le module de commutation (1) comprenant deux boutons de commutation (2), dans lequel l'adaptateur de cadre (6) comprend deux compartiments (6a, 6b), chaque compartiment (6a, 6b) comprenant des points de pivotement (7) pour recevoir un des adaptateurs de bouton (4).

3. Module de commutation (1) selon la revendication 1 ou 2, dans lequel l'adaptateur de bouton (4) est raccordé fixe au bouton de commutation (2).

4. Module de commutation (1) selon la revendication 1 ou 2, dans lequel l'adaptateur de bouton (4) est raccordé amovible au bouton de commutation (2).

5. Module de commutation (1) selon l'une quelconque des revendications précédentes, dans lequel l'adaptateur de cadre (6) est raccordé fixe au cadre de montage (3).

6. Module de commutation (1) selon l'une quelconque des revendications 1 à 4, dans lequel l'adaptateur de cadre (6) est raccordé amovible au cadre de montage (3).

7. Module de commutation (1) selon l'une quelconque des revendications précédentes, dans lequel le bouton de commutation est un bouton à bascule, un bouton à balancement, un bouton de commutation carré ou similaire.

8. Module de commutation (1) selon l'une quelconque des revendications précédentes, comprenant en outre une plaque de recouvrement (10).

9. Module de commutation (1) selon la revendication 8, dans lequel la plaque de recouvrement (10) comprend un guide de lumière (11).
